Europäisches Patentamt

(19) European Patent Office

Office européen des brevets

(11) Veröffentlichungsnummer: **0 028 701**
**B1**

# EUROPÄISCHE PATENTSCHRIFT

(12)

(45) Veröffentlichungstag der Patentschrift:
**20.07.83**

(21) Anmeldenummer: **80105859.5**

(22) Anmeldetag: **27.09.80**

(51) Int. Cl.³: **C 08 L 67/02**, C 08 K 3/26 //
(C08L67/02, 33/16)

(54) **Flammgeschütztes Polybutylenterephthalat mit verbesserter Viskosität und Verfahren zu seiner Herstellung.**

(30) Priorität: **27.10.79 DE 2943535**

(43) Veröffentlichungstag der Anmeldung:
**20.05.81 Patentblatt 81/20**

(45) Bekanntmachung des Hinweises auf die Patenterteilung:
**20.07.83 Patentblatt 83/29**

(84) Benannte Vertragsstaaten:
**BE CH DE FR GB IT LI NL**

(56) Entgegenhaltungen:
**CH-A-555 386**
**DE-A-2 815 035**
**GB-A-1 512 516**
**US-A-4 102 853**

(73) Patentinhaber: **DYNAMIT NOBEL
AKTIENGESELLSCHAFT, Patentabteilung
Postfach 1209, D-5210 Troisdorf, Bez. Köln (DE)**

(72) Erfinder: **Schmidt, Werner, Dr., Drachenfelsstrasse 49,
D-5201 St. Augustin (DE)**
Erfinder: **Minke, Rüdiger, Dr., Augustinusstrasse 4,
D-5210 Troisdorf (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Flammgeschütztes Polybutylenterephthalat mit verbesserter Viskosität und Verfahren zu seiner Herstellung

Unter den thermoplastischen Kunststoffen haben Polyester ein weites Anwendungsgebiet gefunden. Besonders Polybutylenterephthalat (PBT) hat sich aufgrund seiner guten Gebrauchseigenschaften und seiner leichten Verarbeitbarkeit schnell einen beachtlichen Marktanteil erworben. Da es wie viele Kunststoffe leicht brennbar ist, hat es auch nicht an Versuchen gefehlt, PBT flammhemmend auszurüsten, um ihm weitere Anwendungsgebiete, z.B. auf manchen Gebieten der Elektroindustrie und Feinwerkstechnik, zu erschliessen.

Es ist bei Fachleuten bekannt, dass die Viskosität von PBT in unmittelbarem Zusammenhang mit seinen Gebrauchseigenschaften steht. Je höher die Viskosität, desto besser werden auch Steifheit, Festigkeit und Zähigkeit der aus solchem PBT hergestellten Formkörper.

Es ist deshalb üblich, das aus Butandiol-1,4 und Terephthalsäure oder Terephthalsäurederivaten hergestellte Polykondensat noch einem weiteren Arbeitsgang zu unterwerfen, der gewöhnlich als Nachkondensation bezeichnet wird und den Zweck hat, die bei der Polykondensation erreichte Viskosität weiter zu erhöhen, um dem PBT dadurch bessere mechanische Eigenschaften zu verleihen.

Als Mass für die Viskosität von PBT dient die sogenannte reduzierte Viskosität $\eta_{red}$, die nach folgender Formel berechnet wird:

$$\eta_{red} = \left( \frac{\eta}{\eta_0} - 1 \right) \times \frac{1}{c}$$

wobei
$\eta$ die Viskosität des Lösungsmittels (60 Gew.-Teile Phenol + 40 Gew.-Teile 1,1,2,2-Tetrachloräthan),
$\eta$ = Viskosität der Lösung, und
$c$ = Konzentration der Lösung (1 g/100 cm³) ist, gemessen bei 25°C.

In vielen Fällen besitzt ein technisch polykondensiertes PBT $\eta_{red}$-Werte zwischen 0,8 und 0,9 dl/g, das durch Nachkondensation auf höhere Viskositäten gebracht wird. Je nach den Anforderungen und dem vorgesehenen Verwendungszweck können so Viskositäten von $\eta_{red}$ bis zu 2,0 dl/g und höher erzielt werden. Handelsübliches PBT besitzt oft $\eta_{red}$-Werte von 1,3 bis 1,6 dl/g. Solches PBT hat bereits sehr gute mechanische Eigenschaften, gute Biegefestigkeit, Schlag- und Kerbschlagzähigkeit.

Es ist ferner bekannt, PBT zur Erhöhung der Steifigkeit mit Zusätzen von Verstärkungsmitteln wie besonders Glasfasern zu versehen. Glasfaserverstärktes PBT hat ebenfalls grosse Bedeutung und wird im Spritzguss zu Formkörpern verarbeitet, bei denen es auf besonders hohe Festigkeit ankommt. Auch hier besitzen Formkörper aus höherviskosem bzw. nachkondensiertem Material bessere Gebrauchseigenschaften.

Unverstärktes und verstärktes PBT wird vielfach mit einer flammhemmenden Ausrüstung versehen, indem z.B. flammhemmend wirkende Stoffe oder Stoffgemische in feiner Verteilung dem PBT-Granulat zugesetzt, gründlich durchmischt und auf einem Kneter oder einem Extruder thermoplastisch eingearbeitet werden. Die hierzu erforderlichen Temperaturen liegen zwischen 240 und 300°C. In der Regel wird das thermoplastische Gemisch zu einem Strang gepresst und dieser zu Granulat zerhackt, das später an geeigneten Spritzgussmaschinen, wieder bei Verarbeitungstemperaturen zwischen 240 und 300°C, zu den gewünschten flammgeschützten Formkörpern gespritzt wird.

Als Flammschutzmittel für PBT wurden bereits zahlreiche Verbindungen vorgeschlagen. Fast stets sind es Brom enthaltende organische Verbindungen, vielfach zusammen mit Antimontrioxid, die dem PBT zugemischt werden.

Zahlreiche Brom enthaltende Verbindungen haben aber Nachteile, z.B. geringe thermische Beständigkeit, die zu Verfärbungen des Compounds führen, oder schlechte Verträglichkeit mit PBT, so dass das Flammschutzmittel allmählich wieder aus dem Formkörper herausdiffundiert und sich als kreidiger Belag an der Oberfläche ablagert.

Bevorzugt geeignet sind Flammschutzmittel, die aus thermisch stabilen, Brom enthaltenden Polymeren bzw. Oligomeren bestehen.

Bevorzugt sind Brom enthaltende Polyester und Copolyester, insbesondere solche auf der Basis von Polyacrylaten, Polymethacrylaten bzw. ggf. Polycarbonaten.

Die thermoplastische Verarbeitung von PBT und auch bereits die thermoplastische Herstellung von PBT-Mischungen, z.B. mit Füll- oder Verstärkungsstoffen, Flammschutzmitteln und anderem, bringt aber einen grossen Nachteil mit sich, der bis heute dem PBT anhaftet: Wegen der erforderlichen hohen Verarbeitungstemperaturen erfolgt teilweise ein Abbau des PBT, durch die thermische Beanspruchung wird die Viskosität des eingesetzten PBT vermindert und der $\eta_{red}$-Wert erniedrigt. Dieser Vorgang ist ganz und gar unerwünscht, weil dadurch unmittelbar die Gebrauchseigenschaften der so hergestellten Formkörper verschlechtert werden. Man versucht deshalb, von PBT einer möglichst hohen Viskosität auszugehen, um im fertigen Formkörper noch ausreichend hohe Viskositäten, d.h. noch ausreichende Gebrauchseigenschaften, vorzufinden. Diesem Verfahren sind aber Grenzen gesetzt, und zwar aus folgenden drei Gründen:

1. Je höher die Ausgangsviskosität des PBT ist, desto stärker wird der Abbau bei der thermoplastischen Verarbeitung.
2. PBT sehr hoher Viskosität lässt sich schwer thermoplastisch verarbeiten.
3. Die Nachkondensation von PBT bis zu sehr hohen Viskositäten vermindert die Wirtschaftlichkeit des Verfahrens.

Ferner verstärken eine Reihe von Zusatzstoffen den Abbau des PBT bei der thermoplastischen Verarbeitung. Zahlreiche Füll- und Verstärkungsstoffe mit oder ohne Oberflächenbeschichtung, Farbstoffe und Gleitmittel wirken in dieser Weise.

Besonders aber tritt ein verstärkter Abbau bei Gehalten an einigen Flammschutzmittel in PBT-Compounds auf. Dieser Abbau beginnt bereits bei der Einarbeitung am Extruder und tritt vermehrt bei der stärkeren thermischen Belastung im Spritzguss auf. Bei flammhemmend ausgerüsteten Formkörpern ist aber ein solcher Abbau besonders schädlich und schwerwiegend, weil bereits manche Zusätze von Flammschutzmitteln und Synergisten zu einer Verschlechterung der mechanischen Eigenschaften der Formkörper führen und durch den Viskositätsabbau die Versprödung weiter fortschreitet und schliesslich zur Unbrauchbarkeit der Formkörper führen kann.

Es bestand daher die Aufgabe, den Abbau von Flammschutzmittel enthaltendem PBT bei der Verarbeitung zu senken und trotz gleichbleibender Ursache der Temperaturbelastung soweit als möglich zu verhindern.

Aus der GB-A Nr. 1512516 war bereits bekannt, in Polyesterkompositionen durch Zugabe von Oxiden des Calciums oder Strontiums den Abbaugrad zu senken und die Schmelzviskosität zu stabilisieren. In Gegenwart polymerer Flammschutzmittel ist jedoch dieser Effekt gering. Ferner ist Calciumoxid hygroskopisch und somit veränderlich und schwer handhabbar.

Es wurde nun überraschend gefunden, dass der durch die Verwendung von Flammschutzmitteln verstärkt auftretende Abbau der Viskosität durch geringe Zusätze von wasserfreiem, fein pulverisiertem Natrium- oder Kaliumcarbonat wesentlich verringert werden kann.

Gegenstand der Erfindung sind daher hochschmelzende Polyester auf der Basis von Polybutylenterephthalat mit einer flammhemmenden Ausrüstung durch polymere bromhaltige Flammschutzmittel mit Gehalten von wasserfreiem, feinverteiltem Natrium- oder Kaliumcarbonat in Mengen von 0,05 bis 1 Gew.% der Gesamtmischung.

Weiterer Gegenstand ist ein Verfahren zur Verbesserung des Abbauverhaltens von flammhemmend ausgerüsteten Polyestern bei der thermoplastischen Verarbeitung, welches dadurch gekennzeichnet ist, dass mit polymeren bromhaltigen Flammschutzmitteln versehenen, hochschmelzenden Polyestern vor oder während der Verarbeitung wasserfreies, feinverteiltes Natrium- oder Kaliumcarbonat in Mengen von 0,05 bis 1 Gew.%, bezogen auf das Gesamtgemisch, zugesetzt werden.

Die Carbonate können zu jedem Zeitpunkt der Verarbeitung der Formmasse oder des Verformungsvorgangs zugesetzt werden, spätestens jedoch zu dem Zeitpunkt, wenn die Flammschutzmittel zugesetzt werden, wobei die Zugabe gemeinsam oder auf getrennten Wegen erfolgen kann.

Im Falle der vielfach üblichen Herstellung eines Granulats aus der Kunststoffmischung vor der eigentlichen formgebenden Verarbeitung wird zumeist das Flammschutzmittel bereits der zu granulierenden Mischung zugesetzt, so dass dann auch die Carbonate zugesetzt werden. Wird das Flammschutzmittel, beispielsweise als Konzentrat, erst bei der Verarbeitung zugefügt, erfolgt der Zusatz der Carbonate bei der Verarbeitung oder vorher bei der Granulierung.

Bevorzugt werden 0,1 bis 0,5 Gew.% Natrium- oder Kaliumcarbonat der Mischung zugesetzt.

Als polymere bromhaltige Flammschutzmittel werden oligomere bromhaltige Substanzen mit mindestens einem mittleren Kondensationsgrad von 3, insbesondere über 5, sowie besonders polymere, Brom enthaltende Flammschutzmittel mit 35 bis 85 Gew.%, insbesondere 50 bis 80 Gew.% Brom, verstanden. Unter den bromhaltigen Polymeren sind Homopolymere vielfach bevorzugt, jedoch sind durchaus Copolymere verwendbar. Bevorzugte Polymere sind solche mit Esterbindungen, jedoch kommen solche mit Äther- bzw. Acetalbindungen ebenfalls in Frage. Sehr bevorzugt sind als bromhaltige Polyester bromhaltige Polyacrylate bzw. Polymethacrylate und in zweiter Linie bromhaltige Polycarbonate.

Bromhaltige Poly(meth)acrylate sind u.a. aus den DE-AS Nr. 2527802, DE-PS Nr. 2527803, DE-OS Nrn. 2543746, 2612843 Copolymerisate aus diesen und der DE-OS Nr. 2648969, oligomere Äther aus der DE-OS Nr. 2650117, bromhaltige Polycarbonate u.a. aus der US-PS Nr. 3936400 und der DE-OS Nr. 2310742 bekannt.

Sehr bevorzugt sind unter den Polyacrylaten bzw. ggf. den -methacrylaten die hochbromierten Homopolymerisate von Tetrabromxylylenbisacrylat und Pentabrombenzylacrylat sowie entsprechende hochbromierte Polyacrylate nach der DE-AS Nr. 2527802 sowie in zweiter Linie die Copolymerisate auf Basis dieser Stoffe und — ebenfalls in zweiter Linie — bromhaltige Polycarbonate auf Basis von bromiertem Bisphenol-A, besonders Tetrabrombisphenol-A.

Als Polyester auf der Basis von Polybutylenterephthalat werden besonders der Homopolyester PBT sowie ggf. Copolyester mit Gehalten von mehr als 30, besonders mehr als 50 Gew.% Butylenterephthalat und weiteren Gehalten von besonders Butylenisophthalat sowie ggf. Gehalten von aliphatischen Diolen und/oder aliphatischen Dicarbonsäuren, beispielsweise nach DE-AS Nr. 2045914, verstanden.

Nach dem erfindungsgemässen Verfahren geht man so vor, dass man die einzelnen Bestandteile der Compounds vor dem Vermischen sorgfältig trocknet, dann die Mischung von Hand oder in einem Mischer herstellt und in üblicher Weise über einen Extruder zu Stranggranulat verarbeitet. Das erhaltene Granulat kann anschliessend oder ggf. nach erneutem Trocknen, falls es länger gelagert hat, zu den gewünschten Spritzgusskörpern verspritzt werden.

Die Carbonate werden im allgemeinen in gemahlener Form, besonders mit Korngrössen von 1 bis 20 μm eingesetzt.

Durch den Zusatz der Carbonate wird die Verminderung der Viskosität von unverstärkten wie auch von verstärkten, d.h. mit Füll- oder Verstärkungsmitteln versehenen Polyestern auf der Basis von Polybutylenterephthalat gänzlich oder ganz wesentlich verhindert, soweit der Viskositätsabbau durch die bei der Verarbeitung anwesenden Flammschutzmittel verursacht ist. Damit wird entscheidend die durch den Viskositätsabbau verursachte Verschlechterung der Eigenschaftswerte der Formkörper verhindert bzw. vermindert.

Es ist allerdings nicht möglich, den durch das Zusammenwirken von mechanischer und hoher thermischer Belastung bei Abwesenheit von Flammschutzmitteln ohnehin auftretenden Viskositätsabbau günstig zu beeinflussen.

In gespritzten Formkörpern aus glasfaserverstärkten und mit Flammschutzmitteln versehenen PBT sind durch Zusatz der Carbonate Viskositäten erreichbar, die trotz des geschilderten verstärkten Abbaus nicht niedriger liegen als in Formkörpern aus glasfaserverstärktem PBT gleicher Herkunft. Auch in unverstärktem flammgeschütztem PBT wird der durch das Flammschutzmittel bedingte Abbau der Viskosität sehr weitgehend verhindert.

Demnach ist es gemäss der Erfindung möglich, in flammgeschützten Formkörpern aus PBT ganz wesentlich bessere Eigenschaftskennwerte, besonders bessere mechanische Festigkeitswerte zu erhalten als bisher, bzw. sogar die besonders stark abbauenden PBT-Ausgangsstoffe mit durch Nachkondensation erzielten, sehr hohen Viskositäten zu vermeiden und so einen allgemeinen Vorteil zu erzielen.

Besonders deutlich wird der Vorteil des erfindungsgemässen Verfahrens, wenn man den zunächst erhaltenen Spritzling erneut verspritzt und diesen Vorgang mehrfach wiederholt. Durch den Zusatz von Natrium- oder Kaliumcarbonat erfolgt der Viskositätsabbau des PBT deutlich langsamer, so dass man auch bei dem an Bedeutung ständig zunehmenden Recycling noch Formkörper mit guten Eigenschaften erhält. Die folgenden Prozentangaben sind Gewichtsprozente. Die Rezepturen 1.1 bis 5.1 bzw. 1.2 bis 5.2 bzw. 1.3 bis 5.3 haben jeweils die in Beispiel 1 angegebenen prozentualen Stoffgehalte.

*Beispiel 1:*

Die Bestandteile der Mischungen wurden 6 h bei 110°C vorgetrocknet und an einem Extruder (R 30 der Fa. Reifenhäuser) zu Granulat verarbeitet. Die Herstellung der Spritzlinge erfolgte an einer Schneckenspritzgussmaschine der Fa. Kraus-Maffei. Die Spritzlinge wurden immer wieder zerhackt und erneut verspritzt, insgesamt viermal. Die Ergebnisse werden mit einem carbonatfreien Compound und einem nicht flammgeschützten Ansatz verglichen. Das eingesetzte PBT besass eine reduzierte Viskosität von $\eta_{red}$ = 1,59 dl/g. Als Flammschutzmittel diente Polytetrabrom-p-xylylenglykolbisacrylat (= TBX-PA vernetzt; 55 Gew.% Br).

1.1  55,7% PBT
    30,0% Glasfasern *
    10,0% TBX-PA
    4,0% $Sb_2O_3$
    0,3% $Na_2CO_3$

1.2  56,0% PBT
    30,0% Glasfasern
    10,0% TBX-PA
    4,0% $Sb_2O_3$

1.3  70,0% PBT
    30,0% Glasfasern

* Glaskurzfasern von 3 bis 10 µm Dicke und 3 bis 7 mm Länge.

|  | 1.1 | 1.2 |
|---|---|---|
| $\eta_{red}$ Granulat: | 1,49 dl/g | 1,36 dl/g |
| $\eta_{red}$ Spritzling, 1. Durchsatz: | 1,24 dl/g | 0,98 dl/g |
| $\eta_{red}$ Spritzling, 4. Durchsatz: | 0,91 dl/g | 0,51 dl/g |

|  | 1.3 |
|---|---|
| $\eta_{red}$ Granulat: | 1,52 dl/g |
| $\eta_{red}$ Spritzling, 1. Durchsatz: | 1,21 dl/g |
| $\eta_{red}$ Spritzling, 4. Durchsatz: | 0,96 dl/g |

Bei Verwendung von 0,3% $K_2CO_3$ anstelle von $Na_2CO_3$ werden entsprechende Ergebnisse erhalten.

*Beispiel 2:*

Es wurde entsprechend den Rezepturen des Beispiels 1 verfahren, jedoch hatte das PBT eine reduzierte Viskosität $\eta_{red}$ von 1,61 dl/g; die Spritzlinge wurden an einer Schneckenspritzgussmaschine der Fa. Arburg hergestellt. Der PBT-Abbau, gemessen an den reduzierten Viskositäten, zeigte folgenden Verlauf:

|  | 2.1 | 2.2 |
|---|---|---|
| $\eta_{red}$ Granulat: | 1,56 dl/g | 1,49 dl/g |
| $\eta_{red}$ Spritzling, 1. Durchgang: | 1,23 dl/g | 0,97 dl/g |

|  | 2.3 |
|---|---|
| $\eta_{red}$ Granulat: | 1,55 dl/g |
| $\eta_{red}$ Spritzling, 1. Durchgang: | 1,31 dl/g |

*Beispiel 3:*

Bei diesen Versuchen wurde das PBT aus Beispiel 1 eingesetzt, als TBX-PA, jedoch eine andere Lieferung verwendet, um ggf. den zufälligen Einfluss einer bestimmten Charge TBX-PA zu erfassen. Es ergaben sich folgende reduzierte Viskositäten:

|  | 3.1 | 3.2 |
|---|---|---|
| $\eta_{red}$ Granulat: | 1,41 dl/g | 1,31 dl/g |
| $\eta_{red}$ Spritzling, 1. Durchgang: | 1,23 dl/g | 1,02 dl/g |

|  | 3.3 |
|---|---|
| $\eta_{red}$ Granulat: | 1,48 dl/g |
| $\eta_{red}$ Spritzling, 1. Durchgang: | 1,28 dl/g |

*Beispiel 4:*

Beispiel 1 wurde wiederholt, jedoch wurde als polymeres bromhaltiges Flammschutzmittel Polypentabrombenzylacrylat (= PBB-PA, Mol.-Gew. 69 000; 69 Gew.% Br) verwendet.

1.1  57,8% PBT
    30,0% Glasfasern
    9,0% PBB-PA
    3,0% $Sb_2O_3$
    0,2% $Na_2CO_3$

1.2  58,0% PBT
    30,0% Glasfasern
    9,0% PBB-PA
    3,0% $Sb_2O_3$

1.3  70% PBT
30% Glasfasern

| | 1.1 | 1.2 |
|---|---|---|
| $\eta_{red}$ Granulat: | 1,50 dl/g | 1,41 dl/g |
| $\eta_{red}$ Spritzling, 1. Durchgang: | 1,23 dl/g | 1,09 dl/g |

| | 1.3 |
|---|---|
| $\eta_{red}$ Granulat: | 1,52 dl/g |
| $\eta_{red}$ Spritzling, 1. Durchgang: | 1,21 dl/g |

*Beispiel 5:*

Den Einfluss des erfindungsgemässen Zusatzes bei unverstärktem flammgeschütztem PBT zeigen folgende Versuche, bei denen das TBX-PA des Beispiels 1 verwendet wurde:

5.1  85,7% PBT      5.2  86,0% PBT
10,0% TBX-PA            10,0% TBX-PA
4,0% $Sb_2O_3$          4,0% $Sb_2O_3$
0,3% $Na_2CO_3$

| | 5.1 | 5.2 |
|---|---|---|
| $\eta_{red}$ Granulat: | 1,30 dl/g | 1,12 dl/g |
| $\eta_{red}$ Spritzling, 1. Durchgang: | 1,24 dl/g | 0,92 dl/g |
| $\eta_{red}$ Spritzling, 4. Durchgang: | 1,06 dl/g | 0,77 dl/g |

*Vergleichsbeispiel*

Grössere Zusatzmengen von Carbonaten haben hingegen eine nachteilige Wirkung:

53% PBT wie in Beispiel 1
30% Glasfasern
10% TBX-PA aus Beispiel 1
4% $Sb_2O_3$
3% $Na_2CO_3$

Die Behandlung und Verarbeitung entsprach den Ansätzen der Beispiele 1 bis 4. Hier erfolgte aber ein deutlich stärkerer Viskositätsabbau als ohne Carbonatzusatz. Während im Granulat bereits ein Abfall von $\eta_{red}$ auf 0,84 dl/g gemessen wurde, fiel sie im Spritzling schon nach einmaligem Verspritzen sogar auf 0,62 dl/g ab.

## Patentansprüche

1. Hochschmelzende Polyester auf der Basis von Polybutylenterephthalat mit einer flammhemmenden Ausrüstung durch polymere bromhaltige Flammschutzmittel, gekennzeichnet durch Gehalte von wasserfreiem, feinverteiltem Natrium- oder Kaliumcarbonat in Mengen von 0,05 bis 1 Gew.% der Gesamtmischung.

2. Verfahren zur Verbesserung des Abbauverhaltens von flammhemmend ausgerüsteten Polyestern bei der thermoplastischen Verarbeitung, dadurch gekennzeichnet, dass mit polymeren bromhaltigen Flammschutzmitteln versehen, hochschmelzenden Polyestern vor oder während der Verarbeitung wasserfreies, feinverteiltes Natrium-

oder Kaliumcarbonat in Mengen von 0,05 bis 1 Gew.%, bezogen auf das Gesamtgemisch, zugesetzt werden.

3. Verfahren nach Anspruch 2, dadurch gekennzeichnet, dass die Carbonate dem Polyester vorab, spätestens aber zum gleichen Zeitpunkt wie die Flammschutzmittel zugesetzt werden.

4. Verfahren nach mindestens einem der beiden Ansprüche 2 oder 3, dadurch gekennzeichnet, dass als polymere bromhaltige Flammschutzmittel bromhaltige Polyacrylate bzw. -methacrylate oder bromhaltige Polycarbonate verwendet werden.

5. Verfahren nach mindestens einem der Ansprüche 2 bis 4, dadurch gekennzeichnet, dass die Mischungsbestandteile vor Beginn der Verarbeitung getrocknet werden.

## Revendications

1. Polyesters à haut point de fusion à base de poly(téréphtalate de butylène) ayant reçu un traitement ignifugeant par l'intermédiaire d'agents d'ignifugation polymères bromés, caractérisés par des teneurs en carbonate de sodium ou de potassium anhydre finement divisé de l'ordre de 0,05 à 1% en poids du mélange total.

2. Procédé pour l'amélioration du comportement à la dégradation de polyesters ayant reçu un traitement ignifugeant lors de la transformation thermoplastique, caractérisé en ce que des polyesters à haut point de fusion dotés d'agents d'ignifugation polymères bromés sont additionnés, avant ou pendant la transformation, de carbonate de sodium ou de potassium anhydre finement divisé à raison de 0,05 à 1% en poids par rapport au mélange total.

3. Procédé selon la revendication 2, caractérisé en ce que les carbonates sont ajoutés préalablement au polyester mais au plus tard au même moment que les agents d'ignifugation.

4. Procédé selon au moins une des revendications 2 ou 3, caractérisé en ce que des polyacrylates, respectivement des polyméthacrylates bromés ou des polycarbonates bromés, sont utilisés comme agents d'ignifugation polymères bromés.

5. Procédé selon au moins une des revendications 2 à 4, caractérisé en ce que les constituants du mélange sont séchés avant la transformation.

## Claims

1. High-melting polyester based on polybutyleneterephthalate with a flame-resisting finish by means of polymeric bromine-containing flame protecting means, characterised by contents of water-free, finely divided sodium or potassium carbonate in amounts of 0.05 to 1% by weight of the total mixture.

2. Process for the improvement of the degradation performance of flame-resisting finished polyesters during thermoplastic working, characterised in that before or during the working water-free, finely divided sodium or potassium carbonate are added to high-melting polyesters provided with polymeric bromine-containing flame protective means in amounts of 0.05 to 1% weight related to the total mixture.

3. Process according to claim 2, characterised in that the carbonates are added to the polyester to begin with at the latest simultaneously with the flame protective means.

4. Process according to at least one of claims 2 or 3, characterised in that bromine-containing polyacrylates or methacrylates or bromine-containing polycarbonates are used as polymeric bromine-containing flame protective means.

5. Process according to at least one of claims 2 to 4, characterised in that the components of the mixture are dried before the beginning of the working.